# EUROPÄISCHE PATENTANMELDUNG

(11) **EP 4 534 347 A1**
(43) Veröffentlichungstag der Anmeldung: **09.04.2025**
(21) Anmeldenummer: 24203496.5
(22) Anmeldetag: 30.09.2024
(51) Int. Cl.: B60N 2/22, B60N 2/34, B60N 2/18

(54) **SITZ, INSBESONDERE FAHRZEUGSITZ**

(30) Priorität: 02.10.2023 DE 102023209659
(71) Anmelder: Adient US LLC, Plymouth, MI 48170 (US)
(72) Erfinder: KONJIWALE, Pradeep, Pune, Maharashtra 412105 (IN); DESHPANDE, Umesh, Pune, Maharashtra 411041 (IN); MOON, Supriya, Pune, Maharashtra 411034 (IN)
(74) Vertreter: Liedtke & Partner Patentanwälte

(57) **Zusammenfassung**

Die Erfindung bezieht sich auf einen Sitz (100, 1000), insbesondere Fahrzeugsitz, der mindestens Folgendes umfasst
- eine Sitzstützstruktur (130), die mindestens ein festgelegtes Basiselement (140), eine Sitzschale (102) und eine Rückenlehne (104) umfasst, die relativ zum Basiselement (140) verstellbar sind, und
- einen Neigemechanismus (200), der ausgebildet ist, die Sitzstützstruktur (130) zwischen einer aufrechten Sitzposition (150) und mindestens einer horizontalen Bettposition (152)zu bewegen,
dadurch gekennzeichnet, dass
- der Neigemechanismus (200) einen ersten Gestängemechanismus (210), mit dem die Sitzschale (102) an das Basiselement (140) gekoppelt ist, und einen zweiten Gestängemechanismus (220), mit dem die Rückenlehne (104) an das Basiselement (140) gekoppelt ist, umfasst,
- wobei beide Gestängemechanismen (210, 220) in der aufrechten Sitzposition (150) relativ zueinander in einem entkoppelten Zustand (202) gehalten sind oder werden und bei Betätigung des Neigemechanismus (200) einen gekoppelten Zustand (204) einnehmen, um die Sitzstützstruktur (130) in die horizontale Bettposition (152) zu transferieren.

## Beschreibung

### HINTERGRUND DER OFFENBARUNG

Die Erfindung bezieht sich auf einen Sitz, insbesondere einen Fahrzeugsitz, der mindestens eine Sitzstützstruktur und einen Neigemechanismus umfasst, der dazu ausgestaltet ist, die Sitzstützstruktur zwischen einer aufrechten Sitzposition und mindestens einer horizontalen Bettposition zu bewegen.

Aus dem Stand der Technik sind eine große Vielfalt von verstellbaren, insbesondere neigbaren Sitzen, wie Transportfahrzeugsitze oder Flugpassagiersitze bekannt. Ein Fahrzeugsitz umfasst beispielsweise mindestens eine Sitzschale und eine Rückenlehne, wobei die Rückenlehne schwenkbar an die Sitzschale gekoppelt ist. Die Rückenlehne kann über einen angetriebenen Neigemechanismus an die Sitzschale gekoppelt sein. Ferner kann der Fahrzeugsitz eine Schienenbaugruppe zum Verstellen des Fahrzeugsitzes in einer Längsrichtung umfassen.

### ZUSAMMENFASSUNG DER OFFENBARUNG

Es ist ein Ziel der vorliegenden Offenbarung, einen verbesserten Sitz, insbesondere einen Fahrzeugsitz, bereitzustellen, der leicht zwischen mindestens einer aufrechten Ausgangssitzposition wie einer Einstiegsposition/Ausstiegsposition und Sitzposition und mindestens einer horizontalen Bettposition, in der die Sitzschale und die Rückenlehne eine verlängerte Liegefläche bilden, verstellbar ist. Insbesondere ist ein Ziel der vorliegenden Offenbarung, einen robusten, weniger komplexen und bedienungsfreundlichen Sitz bereitzustellen, der einen Neigemechanismus umfasst, der dazu ausgestaltet ist, den Sitz höchst komfortabel durch einen ganzen Sitzverstellbewegungsbereich zu transferieren.

Bevorzugte Ausführungsformen der Erfindung ergeben sich aus den abhängigen Ansprüchen.

Zum Erreichen der obigen Ziele weist die vorliegende Erfindung einen Sitz, insbesondere einen Fahrzeugsitz, auf, der mindestens eine Sitzstützstruktur umfasst, die mindestens ein festgelegtes Basiselement, eine Sitzschale und eine Rückenlehne, die relativ zum Basiselement verstellbar sind, sowie einen Neigemechanismus umfasst, der dazu ausgebildet ist, die Sitzstützstruktur zwischen einer aufrechten Sitzposition und mindestens einer horizontalen Bettposition zu bewegen. Der Neigemechanismus umfasst einen ersten Gestängemechanismus, mit dem die Sitzschale an das Basiselement gekoppelt ist, und einen zweiten Gestängemechanismus, mit dem die Rückenlehne an das Basiselement gekoppelt ist, wobei beide Gestängemechanismen in der aufrechten Sitzposition relativ zueinander in einem entkoppelten Zustand gehalten werden und bei Betätigung des Neigemechanismus einen gekoppelten Zustand einnehmen, um die Sitzstützstruktur in die horizontale Bettposition zu transferieren.

Die mit der Erfindung erzielten Vorteile bestehen in einer einheitlichen und reibungslosen Sitzverstellbewegung, während die Sitzstützstruktur, das heißt die Sitzschale und die Rückenlehne, aus der aufrechten Sitzposition in die horizontale Bettposition transferiert wird. Die Gestängemechanismen können zur Durchführung einer kombinierten Bewegung, insbesondere einer Verstellbewegung, in den gekoppelten Zustand gelangen. In einer möglichen Ausführungsform werden somit weniger Antriebseinheiten wie Motoreinheiten zur Betätigung des Gestängemechanismus benötigt.

Aufgrund der Vielzahl von Verstellmöglichkeiten sind Sitzstützstrukturen, beispielsweise Unterrahmen, häufig sehr kompliziert, was jedoch zu hohem Materialaufwand sowie zu hohen Herstellungskosten für solche Sitze führt.

Der erfindungsgemäße Sitz sieht zwei Gestängemechanismen vor, die in der aufrechten Sitzposition in einem entkoppelten Zustand bezüglich einander gehalten werden und bei Betätigung des Neigemechanismus einen gekoppelten Zustand einnehmen, um die Sitzstützstruktur in die horizontale Bettposition zu transferieren, wobei der Sitz im Wesentlichen kompakt, mit geringerem Gewicht und vergleichsweise komponentenoptimiert ausgelegt werden kann.

Der Neigemechanismus kann lediglich eine an einen der Gestängemechanismen gekoppelte Antriebseinheit umfassen, wobei die Gestängemechanismen durch Antriebsbetätigung eines der Gestängemechanismen so bewegt werden, dass er den anderen der Gestängemechanismen koppelt, um eine kombinierte Bewegung, insbesondere eine Neigebewegung, durchzuführen. Es versteht sich, dass für den Neigemechanismus mehr als eine Antriebseinheit verwendet werden kann, was jedoch vermieden werden kann.

Im Falle eines manuell betätigbaren Neigemechanismus kann der Neigemechanismus durch einhändige Betätigung betätigt werden kann, um die Sitzstützstruktur zwischen der aufrechten Sitzposition und der horizontalen Bettposition zu drehen. Die Erfindung sorgt für verbesserte Sitzverstellfunktionalität. Der Neigemechanismus trägt dazu bei, die Sitzschale wie ein Sitzpolster anzuheben, während die Rückenlehne gleichzeitig geneigt wird. Der Benutzer kann beispielsweise die Rückenlehne schieben oder an ihr ziehen, das heißt der Benutzer kann den zweiten Gestängemechanismus manuell betätigen, um eine kombinierte Verstellbewegung der Sitzschale und der Rückenlehne aus der aufrechten Sitzposition in die horizontale Bettposition und umgekehrt zu erzielen. Der Neigemechanismus ist so ausgestaltet, dass auch das Rückführen der Sitzstützstruktur aus der horizontalen Bettposition in die aufrechte Sitzposition als eine kombinierte Verstellbewegung ausgeführt werden kann, die beispielsweise durch die Antriebseinheit und/oder durch eine einhändige Betätigung angetrieben wird.

Die Gestängemechanismen können in dem gekoppelten Zustand dazu ausgestaltet sein, die Sitzschale und die Rückenlehne gleichzeitig zu bewegen. Die Sitzschale und die Rückenlehne können bequem und einheitlich eine Verstellbewegung zwischen einer aufrechten Sitzposition, mindestens einer geneigten Zwischenposition und einer horizontalen Bettposition durchführen.

Die aufrechte Sitzposition kann die Ausgangsposition sein, in der die Rückenlehne im Wesentlichen senkrecht bezüglich der Sitzschale angeordnet sein kann. Eine durch die Rückenlehne gehende Achse kann beispielsweise in einem Winkel von ungefähr 3° bis 17° zu einer vertikalen Achse angeordnet sein. Bei der geneigten Zwischenposition kann es sich um eine Komfortposition handeln, in der die Rückenlehne bezüglich der Sitzfläche in einer geneigteren Position angeordnet sein kann. Die durch die Rückenlehne gehende Achse kann beispielsweise in einem Winkel von ungefähr 17° bis weniger als 80° zu der vertikalen Achse angeordnet sein. Bei der horizontalen Bettposition kann es sich um eine Schlafposition oder Liegeposition handeln, in der die Rückenlehne eine im Wesentlichen horizontale Ebene mit der Sitzfläche bildet. Die durch die Rückenlehne gehende Achse kann hier in einem Winkel von ungefähr 85° bis 90° zu einer vertikalen Achse angeordnet sein. Die durch die Rückenlehne gehende Achse kann insbesondere im Wesentlichen parallel zu einer horizontalen Achse angeordnet sein und eine horizontale Liegeebene mit der Sitzschale bilden.

Die Gestängemechanismen können dazu ausgestaltet sein, in dem gekoppelten Zustand die Sitzschale um eine erste horizontale Schwenkachse anzuheben und die Rückenlehne um eine zweite horizontale Schwenkachse zu neigen. Die erste horizontale Schwenkachse kann von der zweiten horizontalen Schwenkachse verschieden sein.

Die erste horizontale Schwenkachse der Sitzschale kann durch ein festgelegtes Drehgelenk definiert sein, das in einem vorderen Abschnitt der Sitzschale angeordnet ist. Das vordere festgelegte Drehgelenk kann mit dem Basiselement gekoppelt sein und/oder kann an dem Basiselement angeordnet sein. Die zweite horizontale Schwenkachse der Rückenlehne kann durch ein festgelegtes Drehgelenk definiert sein, das an dem Basiselement beispielsweise in einem Bereich einer Querstange und/oder einer Beschlagvorrichtung, beispielsweise eines gemeinsamen Neigesystems, angeordnet und/oder daran gekoppelt sein kann. Das festgelegte Drehgelenk bezieht sich auf eine festgelegte Position an dem Basiselement.

Der Neigemechanismus kann so ausgestaltet sein, dass der gekoppelte Zustand der Gestängemechanismen durch Betätigung wie manuelle Betätigung und/oder motorgetriebene Betätigung des zweiten Gestängemechanismus bezüglich des Basiselements erreicht wird.

Eine Antriebseinheit kann an das festgelegte Drehgelenk der Rückenlehne und/oder an die Querstange und/oder die Beschlagvorrichtung gekoppelt sein. Durch Drehen des festgelegten Drehgelenks kann der zweite Gestängemechanismus um das festgelegte Drehgelenk geschwenkt werden, das eine horizontale Schwenkachse definiert. Die Rückenlehne kann als Alternative oder optional zusätzlich ein Betätigungselement wie einen Betätigungshebel umfassen, an dem der Benutzer zur Betätigung der Bewegung des zweiten Gestängemechanismus ziehen kann.

Die Gestängemechanismen können Koppelelemente umfassen, die an Gestängeenden der Gestängemechanismen sowie im entkoppelten Zustand voneinander beabstandet angeordnet sind und im gekoppelten Zustand miteinander in Eingriff gelangen. Die Koppelelemente können als entsprechende Rastelemente, Clipelemente, vorragende Laschen und Aussparungen ausgestaltet sein, die miteinander in lösbaren Eingriff kommen können.

Beispielsweise sind die Gestängemechanismen im entkoppelten Zustand voneinander getrennt. Insbesondere sind die Gestängemechanismen im entkoppelten Zustand vollständig mechanisch voneinander entkoppelt. Mit anderen Worten: Die Gestängemechanismen sind führungsfrei voneinander entkoppelt.

Der erste Gestängemechanismus kann mindestens ein erstes Koppelelement umfassen, das beweglich in einem Führungselement geführt ist, das an dem festgelegten Basiselement angeordnet ist. Der zweite Gestängemechanismus kann mindestens ein zweites Koppelelement mit einem Aufnahmeabschnitt umfassen, der in dem gekoppelten Zustand mit dem ersten Koppelelement in Kontakt, insbesondere Eingriff, kommt. Ferner kann der zweite Gestängemechanismus ein drittes Koppelelement mit einem Aufnahmeabschnitt umfassen, der in dem gekoppelten Zustand mit dem ersten Koppelelement in Kontakt, insbesondere Eingriff, kommt.

Der Kontakt oder Eingriff des zweiten Koppelelements mit dem ersten Koppelelement kann beispielsweise bei Betätigung, insbesondere Bewegung, des zweiten Gestängemechanismus aus der aufrechten Sitzposition und/oder der geneigten Zwischenposition in die horizontale Bettposition eine Bewegung des ersten Gestängemechanismus einleiten. Der Kontakt oder Eingriff des dritten Koppelelements mit dem ersten Koppelelement kann beispielsweise bei Betätigung, insbesondere Bewegung, des zweiten Gestängemechanismus aus der horizontalen Bettposition in die geneigte Zwischenposition und/oder die aufrechte Sitzposition eine Bewegung des ersten Gestängemechanismus einleiten.

Der Neigemechanismus kann dazu ausgestaltet sein, die Sitzstützstruktur aus einer Position in eine andere zu transferieren, indem er durch Bewegung des zweiten Koppelelements und optional zusätzlich des dritten Koppelelements das erste Koppelelement entlang des Führungselements verschiebt.

Der Neigemechanismus kann einen Freilaufbereich zwischen den Gestängemechanismen umfassen, dank dessen die Rückenlehne aus der aufrechten Sitzposition in eine geneigte Zwischenposition geneigt werden kann, bevor die Gestängemechanismen in den gekoppelten Zustand gelangen, um die Sitzstützstruktur in die horizontale Bettposition zu transferieren. Bei dem Freilaufbereich kann es sich um einen vordefinierten Abstand zwischen dem zweiten Koppelelement und optional zusätzlich dem dritten Koppelelement des zweiten Gestängemechanismus und dem ersten Koppelelement des ersten Gestängemechanismus handeln.

Bei einem Neigungsgrad der Rückenlehne von ungefähr 65° bis 80°, beispielsweise von ungefähr 78°, kommen beispielsweise die Koppelelemente beider Gestängemechanismen in Kontakt, insbesondere Eingriff, wodurch die Rückenlehne und die Sitzschale auf eine Schlaffläche oder Liegebettfläche, insbesondere die horizontale Bettposition, nivelliert werden. Das bedeutet, dass die Rückenlehne ohne kombinierte Bewegung der Sitzschale um bis zu 65° bis 80° geneigt werden kann, um eine geneigte Zwischenposition, insbesondere eine geneigte Komfortposition, einzunehmen. Die Sitzschale kann in ihrer ursprünglichen aufrechten Sitzposition bleiben. Durch eine weitere Bewegung der Rückenlehne zu ihrer horizontalen Bettposition wird veranlasst, dass die Gestängemechanismen miteinander in Kontakt kommen, so dass die Sitzschale mit der Bewegung der Rückenlehne eingehoben wird, um die horizontale Bettposition einzunehmen.

Der erste Gestängemechanismus kann zwei festgelegte Drehgelenke umfassen, zwischen denen eine erste Anzahl von relativ schwenkbaren Gestängegliedern angeordnet sind, wobei die festgelegten Drehgelenke die Sitzschale an das Basiselement koppeln.

Der zweite Gestängemechanismus kann ein festgelegtes Drehgelenk, das die Rückenlehne an das Basiselement koppelt, sowie eine zweite Anzahl von schwenkbaren Gestängegliedern umfassen, die um das festgelegte Drehgelenk schwenkbar sind.

Bei den Gestängegliedern kann es sich um Gestängestangen oder Gestängestäbe oder ähnlichem handeln. Der erste Gestängemechanismus kann in einer Rückseite der Sitzschale angeordnet sein.

Der weitere Umfang der Anwendbarkeit der vorliegenden Erfindung sowie vorteilhafte Ausführungsformen, die einzeln oder in Kombination miteinander verwendet werden können, gehen aus der nachfolgenden ausführlichen Beschreibung hervor. Es versteht sich jedoch, dass die ausführliche Beschreibung und spezifische Beispiele zwar bevorzugte Ausführungsformen der Erfindung angeben, jedoch nur der Veranschaulichung dienen, da für Fachleute aus dieser ausführlichen Beschreibung verschiedene Änderungen und Modifikationen im Geiste und Geltungsbereich der Erfindung offensichtlich sind.

### AUSFÜHRLICHE BESCHREIBUNG DER BEVORZUGTEN

### AUSFÜHRUNGSFORMEN

Die vorliegende Erfindung wird anhand der nachfolgenden Beschreibung und der beiliegenden Zeichnungen, die lediglich der Veranschaulichung dienen und somit die vorliegende Erfindung nicht einschränken, besser verständlich. Es zeigen:
- Fig. 1:: einen Sitz, insbesondere einen Fahrzeugsitz, aus dem Stand der Technik,
- Fig. 2:: einen Sitz nach einer ersten Ausführungsform, der eine Sitzstützstruktur und einen Neigemechanismus umfasst, um die Sitzstützstruktur zwischen einer aufrechten Sitzposition und mindestens einer horizontalen Bettposition zu bewegen,
- Fig. 3:: den Sitz nach Figur 2 in einer geneigten Zwischenposition,
- Fig. 4:: den Sitz nach Figur 3 in der horizontalen Bettposition,
- Fig. 5:: einen Neigemechanismus nach einer zweiten Ausführungsform, der zwei Gestängemechanismen umfasst, die in einem entkoppelten Zustand in einer aufrechten Sitzposition des Sitzes sind,
- Fig. 6:: mögliche Bewegungsabfolgen des Neigemechanismus nach Figur 5,
- Fig. 7:: den Neigemechanismus nach Figur 5 in einer aufrechten Sitzposition,
- Fig. 8:: den Neigemechanismus nach Figur 5 in einer geneigten Zwischenposition, und
- Fig. 9:: den Neigemechanismus nach Figur 5 in einer horizontalen Bettposition.

Entsprechende Teile sind in allen Figuren mit denselben Bezugssymbolen bezeichnet.

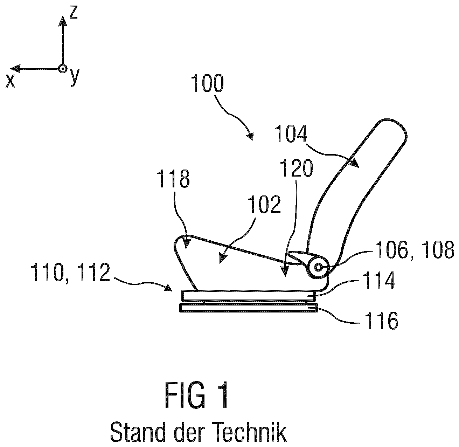

Ein schematisch in Figur 1 gezeigter Fahrzeugsitz 100 aus dem Stand der Technik wird unten unter Verwendung von drei Raumachsen oder Richtungen, die sich senkrecht zueinander erstrecken, beschrieben. Eine Längsachse x verläuft horizontal und vorzugsweise parallel zu einer Längsrichtung eines Fahrzeugs mit einem in dem Fahrzeug installierten Fahrzeugsitz 100. Die Längsrichtung entspricht der üblichen Fahrtrichtung des Fahrzeugs. Eine Querachse y ist ebenfalls horizontal in dem Fahrzeug ausgerichtet und erstreckt sich senkrecht zu der Längsrichtung und parallel zu einer Querrichtung des Fahrzeugs. Eine vertikale Achse z verläuft senkrecht zu der Längsrichtung und senkrecht zu der Querrichtung. Im Falle eines in dem Fahrzeug installierten Fahrzeugsitzes 100 verläuft die vertikale Achse z vorzugsweise parallel zu einer Fahrzeughöhenrichtung.

Die zum Einsatz kommenden Positionsangaben und Richtungsangaben wie vorne, hinten, oben und unten beziehen sich auf eine Blickrichtung eines Insassen, der in einer aufrechten Sitzposition 150 wie in einer normalen Sitzposition auf dem Fahrzeugsitz 100 sitzt, wobei der Fahrzeugsitz 100 in einer für den Fahrgasttransport geeigneten Gebrauchsposition mit einer aufrechten Rückenlehne 104 in dem Fahrzeug installiert ist, wobei der Fahrzeugsitz 100 wie üblich in der Fahrtrichtung ausgerichtet ist. Der Fahrzeugsitz 100 kann aber auch in einer davon abweichenden Ausrichtung installiert oder bewegt werden, beispielsweise quer zu der Fahrtrichtung. Wenn nicht anders beschrieben, ist der Fahrzeugsitz 100 bezüglich einer senkrecht zu der Querrichtung y verlaufenden Ebene spiegelsymmetrisch konstruiert.

Die Rückenlehne 104 kann schwenkbar auf einer Sitzschale 102 des Fahrzeugsitzes 100 angeordnet sein. Dazu kann der Fahrzeugsitz 100 optional eine Beschlagvorrichtung 106, insbesondere einen Verstellbeschlag, einen Schwenkbeschlag, einen Rastbeschlag oder einen Taumelbeschlag umfassen.

Die verwendeten Positionsangaben und Richtungsangaben wie radial, axial und umfangsmäßig beziehen sich auf eine Drehachse 108 der Beschlagsvorrichtung 106. Radial bedeutet senkrecht zu der Drehachse 108; axial bedeutet in der Richtung der Drehachse 108 oder parallel dazu.

Der Fahrzeugsitz 100 kann optional eine Längsverstellvorrichtung 110 umfassen. Die Längsverstellvorrichtung 110 weist beispielsweise eine Schienenbaugruppe 112 mit einem ersten Schienenelement 114 und einem zweiten Schienenelement 116 auf. Das erste Schienenelement 114 ist bezüglich des zweiten Schienenelements 116 in einer Längsrichtung verstellbar. Das erste Schienenelement 114 ist an der Sitzschale 102 angebracht. Das zweite Schienenelement 116 ist an einem Strukturelement eines Fahrzeugs, beispielsweise einem Fahrzeugboden, angebracht.

Aus Deutlichkeitsgründen wird das erste Schienenelement 114 in der folgenden Beschreibung als die obere Schiene 114 bezeichnet. Diese obere Schiene 114 (auch als Laufschiene oder Schlitten bezeichnet) ist dem Fahrzeugsitz 100 zugeordnet und dazu ausgeführt, den Fahrzeugsitz 100 zu stützen. Das zweite Schienenelement 116 wird ferner als die untere Schiene 116 bezeichnet. Die untere Schiene 116 steht fest und ist beispielsweise mit dem Boden eines Fahrzeugs verbunden.

Der bekannte Fahrzeugsitz 100 mit der Beschlagvorrichtung 106 ist so ausgestaltet, dass die Beschlagvorrichtung 106, insbesondere ihre Drehachse 108, die Sitzschale 102 und die Rückenlehne 104 bezüglich einander koppelt. Die Rückenlehne 104 kann um die Drehachse 108 schwenkbar sein. Die Sitzschale 102 kann bezüglich der Drehachse 108 stationär sein.

Ferner umfasst die gemeinhin bekannte stationäre Sitzschale 102 einen vorderen Abschnitt 118, beispielsweise einen gepolsterten vorderen Abschnitt, der von einer horizontalen Mittelfläche der Sitzschale 102 angehoben ist und/oder davon vorragt. Ein solcher vorderer Abschnitt 118 kann eine Oberschenkelstütze, insbesondere ein vorderes Polster und/oder ein Seitenpolster bilden. Als Alternative oder zusätzlich kann der vordere Abschnitt 118 der Sitzschale 102, der die Oberschenkel eines Fahrgasts stützt, bezüglich eines unteren hinteren Abschnitts 120, der beispielsweise das Gesäß des Fahrgasts stützt, angehoben und/oder abgewinkelt angeordnet sein.

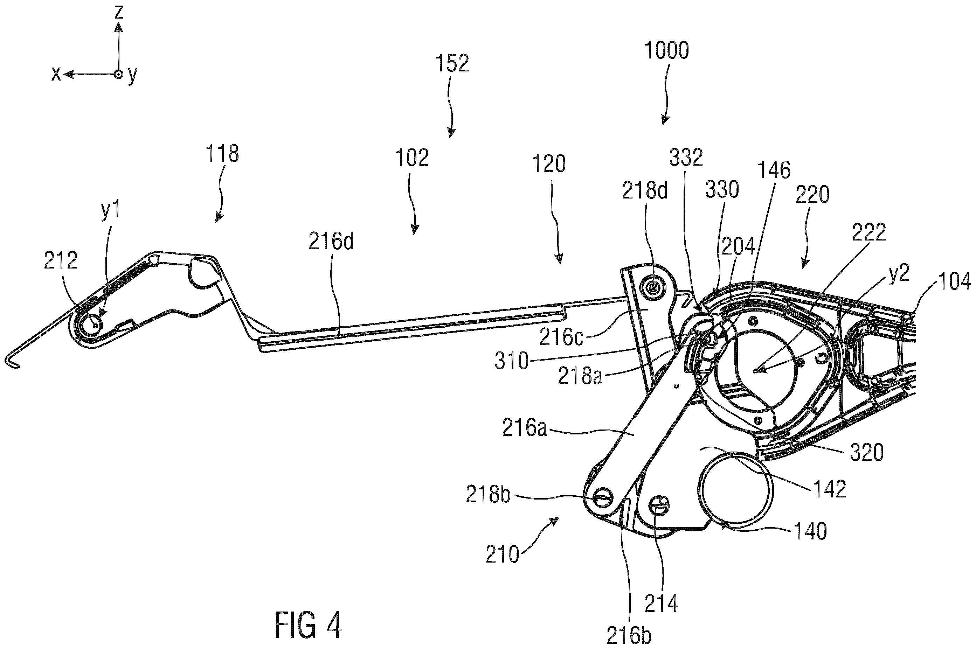

Zur Bereitstellung von größerer Bequemlichkeit für den Fahrgast ist es wünschenswert, einen wie unten beschriebenen Sitz 1000 bereitzustellen, der eine horizontale Bettposition 152, in der die Sitzschale 102 und die Rückenlehne 104 eine im Wesentlichen horizontale Liegefläche oder Schlaffläche bilden können, wie in Figuren 4, 6 und 9 gezeigt, einnehmen kann. Für mehr Komfort ist es wünschenswert, eine bewegliche, beispielsweise schwenkbare, insbesondere anhebbare, Sitzschale 102 bereitzustellen. Es ist insbesondere wünschenswert, einen beweglichen, beispielsweise schwenkbaren, insbesondere anhebbaren hinteren Abschnitt 120 der Sitzschale 102 bereitzustellen, während eine Oberschenkelstützfunktion des vorderen Abschnitts 118 aufrechterhalten wird, wenn der Sitz 1000 in der aufrechten Sitzposition 150 angeordnet ist.

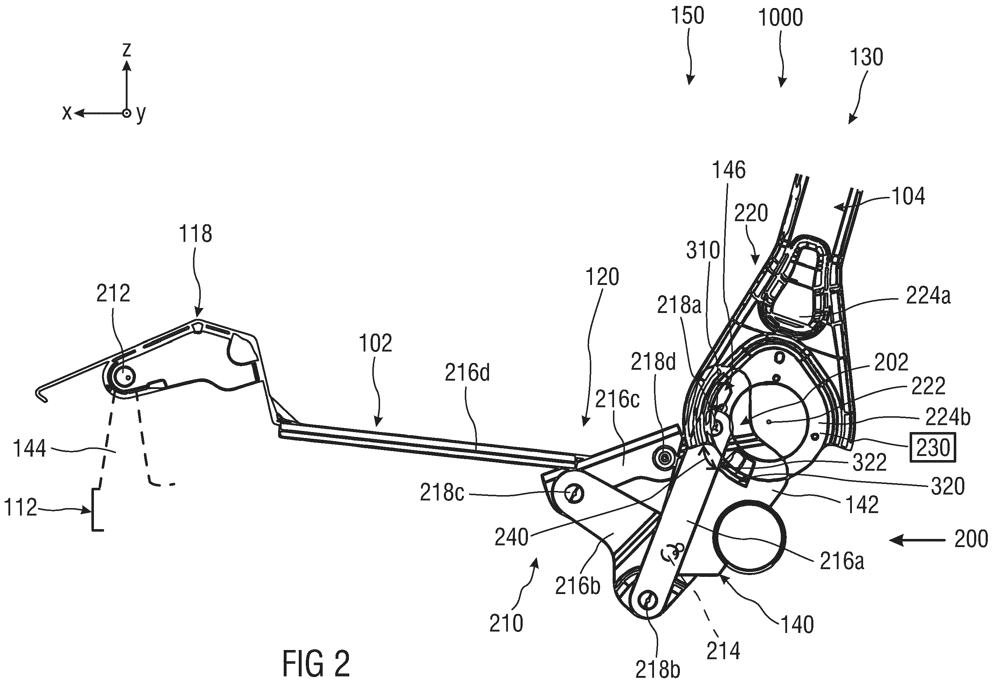

Figur 2 zeigt einen Sitz 1000 nach einer ersten Ausführungsform, der eine Sitzstützstruktur 130 und einen Neigemechanismus 200 umfasst, um die Sitzstützstruktur 130 zwischen einer aufrechten Sitzposition 150 und mindestens einer horizontalen Bettposition 152 zu bewegen.

Die Sitzstützstruktur 130 umfasst die Rückenlehne 104 und die Sitzschale 102. Die Sitzstützstruktur 130 kann eine Sitzrahmenstruktur sein. Die Sitzstützstruktur 130 kann einen Rückenlehnenrahmen umfassen, der eine Polsterung trägt, die eine gepolsterte Rückenlehne 104 bildet. Die Sitzstützstruktur 130 kann einen Sitzschalenrahmen umfassen, der eine Polsterung trägt, die eine gepolsterte Sitzschale 102 bildet.

Ferner umfasst die Sitzstützstruktur 130 ein festgelegtes Basiselement 140. Das festgelegte Basiselement 140 kann eine Basisstruktur sein, die beispielsweise die Sitzstützstruktur 130 auf dem Fahrzeugboden, einer Fahrzeugstruktur und/oder auf der Schienenbaugruppe 112 stützt oder daran koppelt. Bei dem festgelegten Basiselement 140 kann es sich um eine Rahmenstruktur handeln. Der festgelegte Basisrahmen 140 kann einen festgelegten hinteren Basisabschnitt 142 umfassen. Der festgelegte Basisrahmen 140 kann einen festgelegten vorderen Basisabschnitt 144 umfassen. Bei den festgelegten Basisabschnitten 142, 144 kann es sich um sich vertikal erstreckende Rahmenelemente handeln, die die Sitzschale 102 mit dem Fahrzeugboden, einer Fahrzeugstruktur und/oder der Schienenbaugruppe 112, insbesondere mit dem beweglichen ersten Schienenelement 114 verbinden. Die Basisabschnitte 142, 144 können über einen sich horizontal erstreckenden Basisabschnitt und/oder ein Rahmenelement, die nicht weiter gezeigt sind, aneinandergekoppelt sein.

Der Neigemechanismus 200 umfasst einen ersten Gestängemechanismus 210, der die Sitzschale 102 an das Basiselement 140 koppelt, und einen zweiten Gestängemechanismus 220, der die Rückenlehne 104 an das Basiselement 140 koppelt, wobei beide Gestängemechanismen 210, 220 in der aufrechten Sitzposition 150 bezüglich einander in einem entkoppelten Zustand 202 gehalten werden.

Bei Betätigung eines der Gestängemechanismen 210, 220, das heißt des ersten Gestängemechanismus 210 oder des zweiten Gestängemechanismus 220, kann der betätigte Gestängemechanismus 210, 220 kontinuierlich aus der aufrechten Sitzposition 150 in die horizontale Bettposition 152 verbracht werden. Auf einer Bahn entlang einer vorbestimmten Verstellstrecke, beispielsweise in einem Verstellwinkel, können die Gestängemechanismen 210, 220 in dem entkoppelten Zustand 202 bleiben, so dass die Rückenlehne 104 ohne Auswirkungen auf eine Position der Sitzschale 102 aus der aufrechten Sitzposition 150 in mindestens eine geneigte Zwischenposition 154 geneigt werden kann.

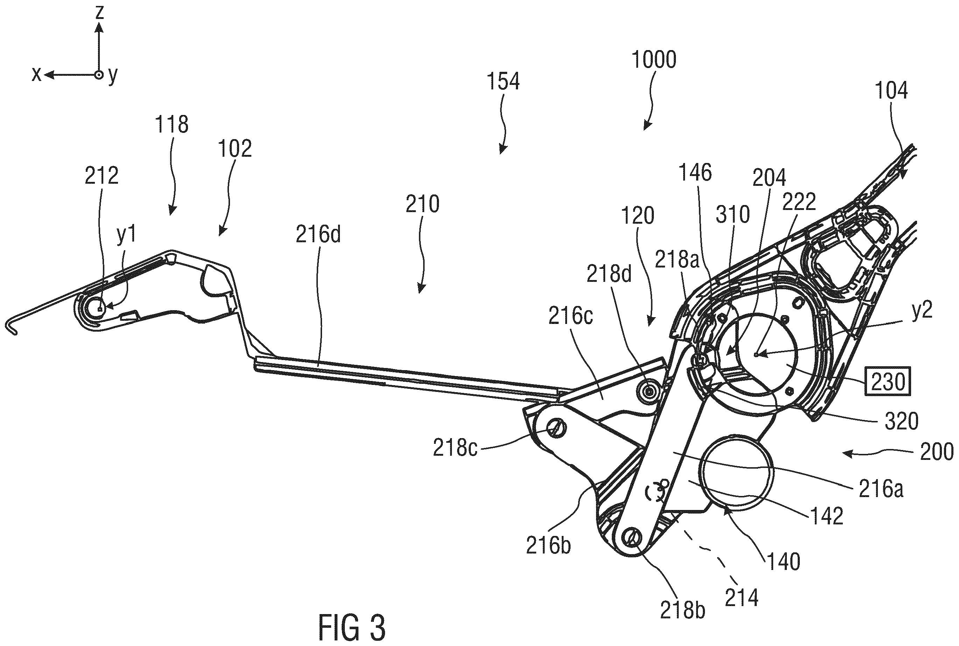

In der geneigten Zwischenposition 154, die in Figuren 3, 6 und 8 gezeigt wird, können beispielsweise die Gestängemechanismen 210, 220 einen gekoppelten Zustand 204 einnehmen. Im gekoppelten Zustand 204 sind beide Gestängemechanismen 210, 220 zusammengekoppelt, das heißt aneinander, so dass einer weitere Betätigung, das heißt Bewegung desselben Gestängemechanismus 210, 220, der zuvor betätigt worden ist, zur Durchführung einer gemeinsamen oder kombinierten Bewegung beider Gestängemechanismen 210, 220 in die horizontale Bettposition 152 führt. Die Betätigung kann motorgetrieben und/oder manuell erfolgen.

Somit kann es ausreichen, den Neigemechanismus 200 mit einer einzigen Antriebseinheit 230 oder einem einzigen Aktuator zu versehen, um das Verstellen der Sitzstützstruktur 130 aus ihrer aufrechten Sitzposition 150 in die horizontale Bettposition 152 und umgekehrt gemäß Pfeil 231 zu erzielen. Zum erfolgreichen Neigen der Sitzstützstruktur 130 kann es ferner ausreichen, die Sitzschale 102 oder die Rückenlehne 104 manuell zu betätigen, beispielsweise sie zu bewegen, daran zu ziehen oder sie zu schieben, um ein vollständiges Verstellen der Sitzstützstruktur 130 aus ihrer aufrechten Sitzposition 150 in die horizontale Bettposition 152 und umgekehrt gemäß Pfeil 231 zu erzielen.

Der erste Gestängemechanismus 210 kann ein erstes festgelegtes Drehgelenk 212 umfassen, das in einem Bereich des vorderen Basisabschnitts 144 an dem Basiselement 140 befestigt ist. Der erste Gestängemechanismus 210 kann ein zweites festgelegtes Drehgelenk 214 umfassen, das in einem Bereich des hinteren Basisabschnitts 142 an dem Basiselement 140 befestigt ist. In Figuren 4 bis 9 wird das zweite festgelegte Drehgelenk 214 aufgedeckt gezeigt. Der erste Gestängemechanismus 210 kann eine erste Anzahl von relativ schwenkbaren Gestängegliedern 216a bis 216d umfassen, die auch als Stangen bekannt sind und die zwischen den festgelegten Drehgelenken 212, 214 angeordnet sind. Die Gestängeglieder 216a bis 216d sind über eine Anzahl von Drehgelenken 218a bis 218d aneinandergekoppelt. Der erste Gestängemechanismus 210 kann ein so genanntes mehrgliedriges Gestänge wie ein viergliedriges Gestänge, ein fünfgliedriges Gestänge oder ein sechsgliedriges Gestänge sein. In der Ausführungsform ist der erste Gestängemechanismus 210 als ein viergliedriges Gestänge ausgestaltet. Der zweite Gestängemechanismus 220 ist als ein einzelner Gestängearm oder ein einzelner Gestängehebel ausgestaltet.

Ein erstes Gestängeglied 216a ist über ein erstes Drehgelenk 218a insbesondere in einem Bereich des hinteren Basisabschnitts 142 beweglich an das Basiselement 140 gekoppelt. Ein zweites Gestängeglied 216b ist über ein zweites Drehgelenk 218b schwenkbar an das erste Gestängeglied 216a gekoppelt. Das zweite Gestängeglied 216b kann eine Gestängeplatte sein, die beispielsweise im Wesentlichen L-förmig ist und dazu ausgestaltet ist, die Gestängeglieder 216a bis 216d schwenkbar an das zweite festgelegte Drehgelenk 214 zu koppeln. Ein drittes Gestängeglied 216c ist schwenkbar an das zweite Gestängeglied 216b und ein viertes Gestängeglied 216d gekoppelt. Das dritte Gestängeglied 216c ist über ein drittes Drehgelenk 218c an das zweite Gestängeglied 216b gekoppelt. Das vierte Gestängeglied 216d koppelt die Gestängeglieder 216a bis 216d an das erste festgelegte Drehgelenk 212. Das vierte Gestängeglied 216d ist über ein viertes Drehgelenk 218d an das dritte Gestängeglied 216c gekoppelt.

Der zweite Gestängemechanismus 220 kann ein festgelegtes Drehgelenk 222 umfassen, das in einem Bereich des hinteren Basisabschnitts 142 an dem Basiselement 140 befestigt ist. Das festgelegte Drehgelenk 222 kann von einer nicht weiter gezeigten bekannten Querstange bereitgestellt werden, die zwei strukturelle Seiten, beispielsweise Rahmenseiten, der Sitzstützstruktur 130 koppelt. Der zweite Gestängemechanismus 220 kann eine zweite Anzahl von schwenkbaren Gestängegliedern 224a, 224b umfassen, die um das festgelegte Drehgelenk 222 schwenkbar sind. In der gezeigten Ausführungsform umfasst der zweite Gestängemechanismus 220 ein erstes Gestängeglied 224a, das eine Rückenlehnenfläche definiert. Der zweite Gestängemechanismus 220 umfasst ein zweites Gestängeglied 224b, das an eine untere Seite des ersten Gestängeglieds 224a gekoppelt ist. Die Gestängeglieder 224a, 224b können als ein einteiliges Teil ausgestaltet sein, das als ein Rückenlehnenrahmen und/oder als ein Rückenlehnenbeschlagteil ausgestaltet ist.

Die Gestängemechanismen 210, 220 umfassen entsprechende Koppelelemente 310, 320, die im entkoppelten Zustand 202 voneinander beabstandet angeordnet sind und die im gekoppelten Zustand 204 in Eingriff kommen. Das erste Drehgelenk 218a des ersten Gestängemechanismus 210 kann ein erstes Koppelelement 310 bilden. Das erste Koppelelement 310 kann ein in Querrichtung ragender Bolzen sein. Der zweite Gestängemechanismus 220 kann ein zweites Koppelelement 320 umfassen. Das zweite Koppelelement 320 kann an einer gegenüberliegenden, insbesondere unteren, Seite der Rückenlehne 104 angeordnet sein. Das zweite Koppelelement 320 kann festgelegt an einem der Gestängeglieder 224a, 224b angeordnet sein. In der gezeigten Ausführungsform ist das zweite Koppelelement 320 an dem zweiten Gestängeglied 224b angeordnet und als eine vorragende Lasche oder Nase ausgestaltet. Das zweite Koppelelement 320 kann bezüglich des festgelegten Drehgelenks 222 radial vorragen. Die Gestängeglieder 224a, 224b sind aneinander befestigt.

Das Basiselement 140, insbesondere der hintere Basisabschnitt 142, kann ein Führungselement 146 umfassen. Das Führungselement 146 kann an einer oberen Seite des Basiselements 140, insbesondere des hinteren Basisabschnitts 142, vorgesehen sein. Das Führungselement 146 kann eine gebogene oder gekrümmte Gestalt haben. Das Führungselement 146 kann gebogen oder gekrümmt sein, so dass ein Mittelpunkt des Bogens oder der Krümmung koaxial mit dem festgelegten Drehgelenk 222 angeordnet sein kann.

Das erste Koppelelement 310, insbesondere das erste Drehgelenk 218a, wird beweglich in dem Führungselement 146 geführt, das an dem festgelegten Basiselement 140 angeordnet ist. Das Führungselement 146 kann ein Schlitzloch sein, insbesondere ein Längsloch, das eine Gleitfixierung für das erste Koppelelement 310 bildet. Das zweite Koppelelement 320 kann einen Aufnahmeabschnitt 322 umfassen, der im gekoppelten Zustand mit dem ersten Koppelelement 310 in Eingriff kommt. Der Neigemechanismus 200 ist dazu ausgestaltet, die Sitzschale 102 und die Rückenlehne 104 aus einer Position 150 zu einer anderen 154 zu transferieren, indem das erste Koppelelement 310 mittels Bewegung des zweiten Koppelelements 320 entlang des Führungselements 146 verschoben wird, wenn die Koppelelemente 310, 320 in dem gekoppelten Zustand 204 sind.

Der Neigemechanismus 200 kann einen Freilaufbereich 240 zwischen dem ersten Koppelelement 310 und dem zweiten Koppelelement 320 umfassen, so dass die Rückenlehne 104 aus der aufrechten Sitzposition 150 in eine geneigte Zwischenposition 154 geneigt werden kann, bevor die Koppelelemente 310, 320 im gekoppelten Zustand 204 in Eingriff kommen, um die Sitzschale 102 und die Rückenlehne 104 in die horizontale Bettposition 152 zu transferieren. Der Freilaufbereich 240 kann einen Abstand zwischen dem ersten Koppelelement 310 und dem zweiten Koppelelement 320 definieren, in dem beide Koppelelemente 310, 320 im entkoppelten Zustand 202 sein können.

Figur 3 zeigt den Sitz 1000 nach Figur 2 in einer geneigten Zwischenposition 154.

Der Neigemechanismus 200 ist so ausgestaltet, dass der gekoppelte Zustand 204 der Gestängemechanismen 210, 220 durch Betätigung, wie manuelle Betätigung und/oder motorgetriebene Betätigung, des zweiten Gestängemechanismus 220 bezüglich des Basiselements 140 erzielt wird. Der zweite Gestängemechanismus 220 kann an die Antriebseinheit 230 gekoppelt sein. Die Antriebseinheit 230 kann ein Neigeantrieb oder Neigeaktuator sein. Die Antriebseinheit 230 kann an das festgelegte Drehgelenk 222 gekoppelt sein, um die Gestängeglieder 224a, 224b zu schwenken. Durch Drehen des festgelegten Drehgelenks 222, beispielsweise eines Rückenlehnenbeschlags oder einer Beschlagstange und/oder die Gestängeglieder 224a, 224b kann der zweite Gestängemechanismus um das festgelegte Drehgelenk 222 geschwenkt werden, das eine zweite horizontale Schwenkachse y2 definiert, die beispielsweise parallel zu der Querachse y verläuft.

Die Gestängemechanismen 210, 220 sind in dem gekoppelten Zustand 204 dazu ausgestaltet, die Sitzschale 102 um eine erste horizontale Schwenkachse y1, die beispielsweise parallel zu der Querachse y verläuft, anzuheben.

Figur 4 zeigt den Sitz 1000 nach Figur 3 in der horizontalen Bettposition 152.

Die Gestängemechanismen 210, 220 sind insbesondere dazu ausgestaltet, die Sitzschale 102 anzuheben, indem sie das dritte und das vierte Gestängeglied 216c, 216d anheben, wie in Figur 4 gezeigt. Dadurch kann der hintere Abschnitt 120 der Sitzschale 102 in einer durchgehenden Bewegung angehoben werden, während eine Oberschenkelstützfunktion des vorderen Abschnitts 118 der Sitzschale 102 beibehalten wird. Die festgelegten Drehgelenke 212, 214 des ersten Gestängemechanismus 210 sind in vertikaler Richtung und in der Längsrichtung voneinander beabstandet angeordnet. Das erste bis dritte Gestängeglied 216a bis 216c sind unter dem hinteren Abschnitt 120 der Sitzschale 102 angeordnet. Die Gestängeglieder 216a bis 216d werden zwischen zwei festgelegten Drehgelenken 212, 214 bezüglich einander geschwenkt, so dass sowohl der hintere Abschnitt 120 als auch eine zwischen dem hinteren Abschnitt 120 und dem vorderen Abschnitt 118 der Sitzschale 102 vorgesehene Sitzfläche bezüglich der ersten horizontalen Schwenkachse y1 angehoben werden.

Für das Zurückbewegen der Sitzstützstruktur 130 aus der horizontalen Bettposition 152 in die aufrechte Sitzposition 150 oder in die geneigte Zwischenposition 154 kann der zweite Gestängemechanismus 220 ein drittes Koppelelement 330 umfassen, das einen Aufnahmeabschnitt 332 hat, der mit dem ersten Koppelelement 310, das heißt mit dem ersten Gestängemechanismus 210, in einer Zurückbewegung in Kontakt, insbesondere in Eingriff, kommt. Der Neigemechanismus 200 ist dazu ausgestaltet, die Sitzschale 102 und die Rückenlehne 104 aus der horizontalen Bettposition 152 in die geneigte Zwischenposition 154 und/oder die aufrechte Sitzposition zu transferieren, indem das erste Koppelelement 310 durch Bewegen des dritten Koppelelements 330 entlang des Führungselements 146 verschoben wird.

Als Alternative oder optional zusätzlich kann der erste Gestängemechanismus 210 federvorgespannt sein, so dass das erste Koppelelement 310 und somit der erste Gestängemechanismus 210 der Zurückbewegung durch Federkraft folgt, wenn das zweite Koppelelement 320 von dem ersten Koppelelement 310 weg bewegt wird. Das dritte Koppelelement 330 wird möglicherweise nicht benötigt.

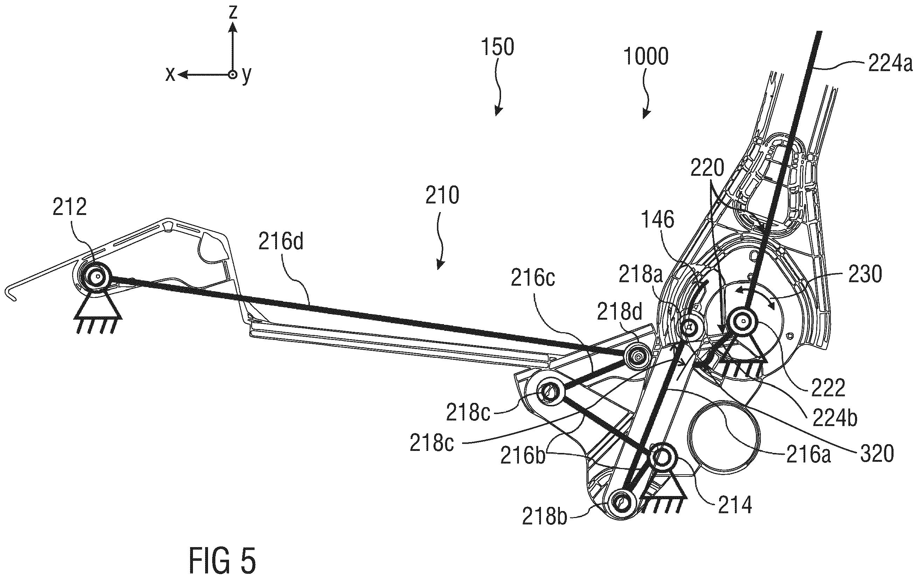

Figur 5 zeigt einen Neigemechanismus 200 nach einer zweiten Ausführungsform, der zwei Gestängemechanismen 210, 220 umfasst, die in einem entkoppelten Zustand 202 in einer aufrechten Sitzposition 150 des Sitzes 1000 sind.

Der Neigemechanismus 200 umfasst einen ersten Gestängemechanismus 210, der die Sitzschale 102 an das Basiselement 140 koppelt, und einen zweiten Gestängemechanismus 220, der die Rückenlehne 104 an das Basiselement 140 koppelt, wobei beide Gestängemechanismen 210, 220 in der aufrechten Sitzposition 150 in einem entkoppelten Zustand 202 bezüglich einander gehalten werden. Bei Betätigung eines der Gestängemechanismen 210, 220, das heißt des ersten Gestängemechanismus 210 oder des zweiten Gestängemechanismus 220, kann der betätigte Gestängemechanismus 210, 220 gleichzeitig aus der aufrechten Sitzposition 150 in die horizontale Bettposition 152 verbracht werden.

Der erste Gestängemechanismus 210 kann ein so genanntes mehrgliedriges Gestänge wie ein viergliedriges Gestänge, ein fünfgliedriges Gestänge oder ein sechsgliedriges Gestänge sein.

Der zweite Gestängemechanismus 220 kann ein festgelegtes Drehgelenk 222 umfassen, das in einem Bereich des hinteren Basisabschnitts 142 an dem Basiselement 140 befestigt ist. In der gezeigten Ausführungsform umfasst der zweite Gestängemechanismus 220 ein erstes Gestängeglied 224a, das eine Rückenlehnenfläche definiert. Der zweite Gestängemechanismus 220 umfasst ein zweites Gestängeglied 224b, das an eine untere Seite des ersten Gestängeglieds 224a gekoppelt ist. Die Gestängeglieder 224a, 224b können als ein einteiliges Teil ausgestaltet sein, das als ein Rückenlehnenrahmen und/oder als ein Rückenlehnenbeschlagteil ausgestaltet ist. Die Gestängemechanismen 210, 220 umfassen entsprechende Koppelelemente 310, 320, die im entkoppelten Zustand 202 voneinander beabstandet angeordnet sind und die im gekoppelten Zustand 204 in Eingriff kommen.

Das erste Drehgelenk 218a des ersten Gestängemechanismus 210 kann ein erstes Koppelelement 310 bilden. Das erste Koppelelement 310 kann ein in Querrichtung ragender Bolzen sein. Der zweite Gestängemechanismus 220 kann ein zweites Koppelelement 320 umfassen. Das zweite Koppelelement 320 kann festgelegt an einem der Gestängeglieder 224a, 224b angeordnet sein. In der gezeigten Ausführungsform ist das zweite Koppelelement 320 an dem zweiten Gestängeglied 224b angeordnet und als eine Aufnahme ausgestaltet. Das zweite Koppelelement 320 kann eine in dem zweiten Gestängeglied 224b gebildete Aussparung sein. Das zweite Gestängeglied 224b ragt bezüglich des festgelegten Drehgelenks 222 radial vor. Die Gestängeglieder 224a, 224b sind aneinander befestigt.

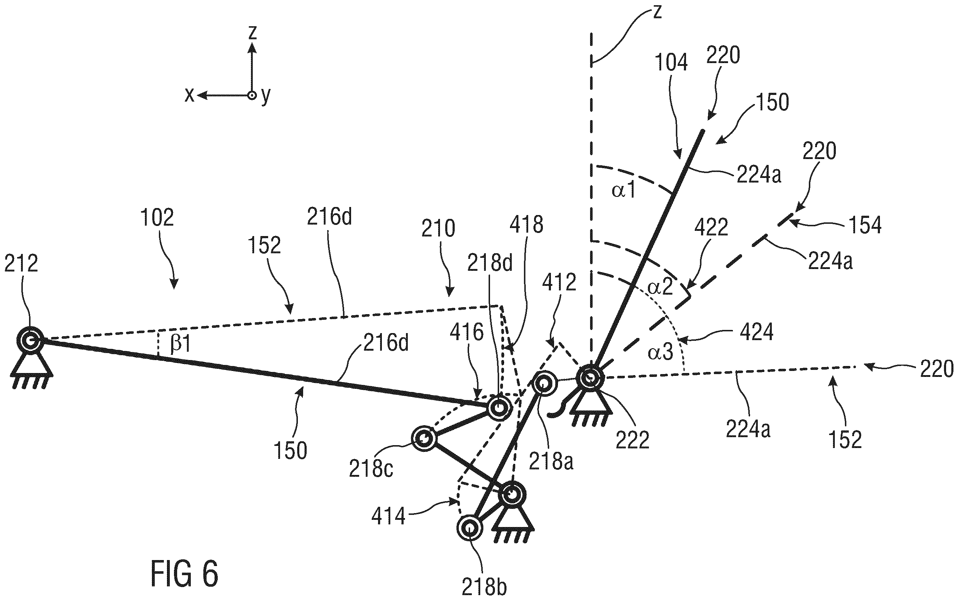

Figur 6 zeigt mögliche Bewegungsabfolgen des Neigemechanismus 200 nach Figur 5.

Die aufrechte Sitzposition 150 kann die Ausgangsposition sein, in der die Rückenlehne 104 im Wesentlichen senkrecht bezüglich der Sitzschale 102 angeordnet sein kann. Das erste Gestängeglied 224a kann beispielsweise in einem ersten Winkel α1 von ungefähr 3° bis 17° (mehr oder weniger) zu der vertikalen Achse z angeordnet sein. Die geneigte Zwischenposition 154 kann eine Komfortposition sein, in der die Rückenlehne 104 bezüglich der Sitzschale 102 in einer geneigteren Position angeordnet sein kann. Das erste Gestängeglied 224a kann beispielsweise in einem zweiten Winkel α2 von ungefähr 17° bis weniger als 80° zu der vertikalen Achse z angeordnet sein. Bei der horizontalen Bettposition 152 kann es sich um eine Schlafposition oder Liegeposition handeln, in der die Rückenlehne 104 eine im Wesentlichen horizontale Ebene mit der Sitzschale 102 bildet. Hier kann das erste Gestängeglied 224a in einem dritten Winkel α3 von ungefähr 85° bis 90° zu der vertikalen Achse z angeordnet sein. In der aufrechten Sitzposition 150 kann die Sitzschale 102 im Wesentlichen parallel zu einem Fahrzeugboden angeordnet sein. Die Sitzschale 102 kann um das erste festgelegte Drehgelenk 212 aus der aufrechten Sitzposition 150 in die horizontale Bettposition 152 zwischen einem Winkel β1 von ungefähr 5° bis 20° geschwenkt werden. Es versteht sich, dass die Winkelbereiche lediglich einem besseren Verständnis dienen sollen, jedoch nicht darauf beschränkt sind.

Ferner sind Bewegungsbahnen 412 bis 418 der Gestängeglieder 216a bis 216d und/oder der Drehgelenke 218a bis 218d des ersten Gestängemechanismus 210 aus der aufrechten Sitzposition 150 in die horizontale Bettposition 152 oder umgekehrt mit gestrichelten Linien markiert. Außerdem sind Bewegungsbahnen 422 und 424 der Gestängeglieder 224a, 224b des zweiten Gestängemechanismus 220 mit gestrichelten Linien markiert.

Eine erste Bewegungsbahn 412 ist einer Bewegung des ersten Drehgelenks 218a und des mindestens einen gekoppelten Gestängeglieds 216a bis 216d zugeordnet. Eine zweite Bewegungsbahn 414 ist einer Bewegung des zweiten Drehgelenks 218b und des mindestens einen gekoppelten Gestängeglieds 216a bis 216d zugeordnet. Eine dritte Bewegungsbahn 416 ist einer Bewegung des dritten Drehgelenks 218c und des mindestens einen gekoppelten Gestängeglieds 216a bis 216d zugeordnet. Eine vierte Bewegungsbahn 418 ist einer Bewegung des vierten Drehgelenks 218d und des mindestens einen gekoppelten Gestängeglieds 216a bis 216d zugeordnet. Eine fünfte Bewegungsbahn 422 ist einer Bewegung der Gestängeglieder 224a, 224b des zweiten Gestängemechanismus 220 bezüglich des festgelegten Drehgelenks 222 aus der aufrechten Sitzposition 150 in die geneigte Zwischenposition 154 zugeordnet. Eine sechste Bewegungsbahn 424 ist einer Bewegung der Gestängeglieder 224a, 224b des zweiten Gestängemechanismus 220 bezüglich des festgelegten Drehgelenks 222 aus der aufrechten Sitzposition 150 in die horizontale Bettposition 152 zugeordnet.

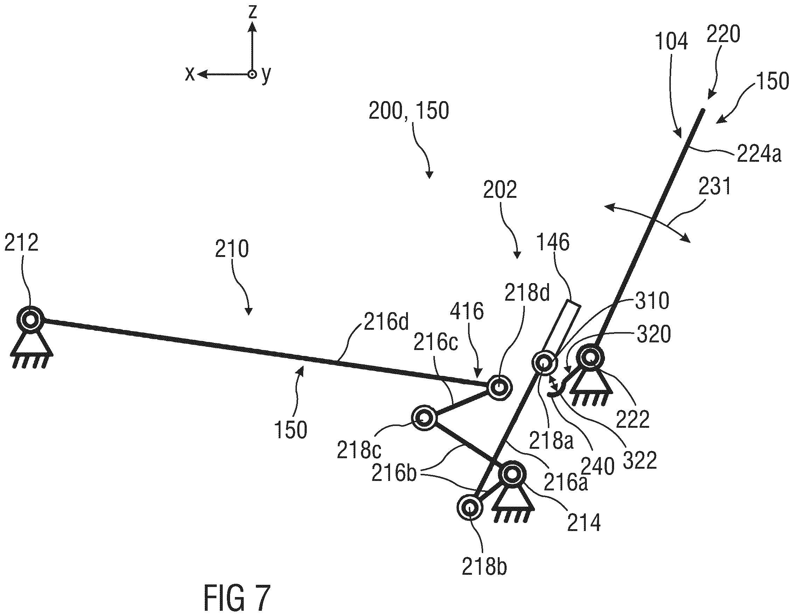

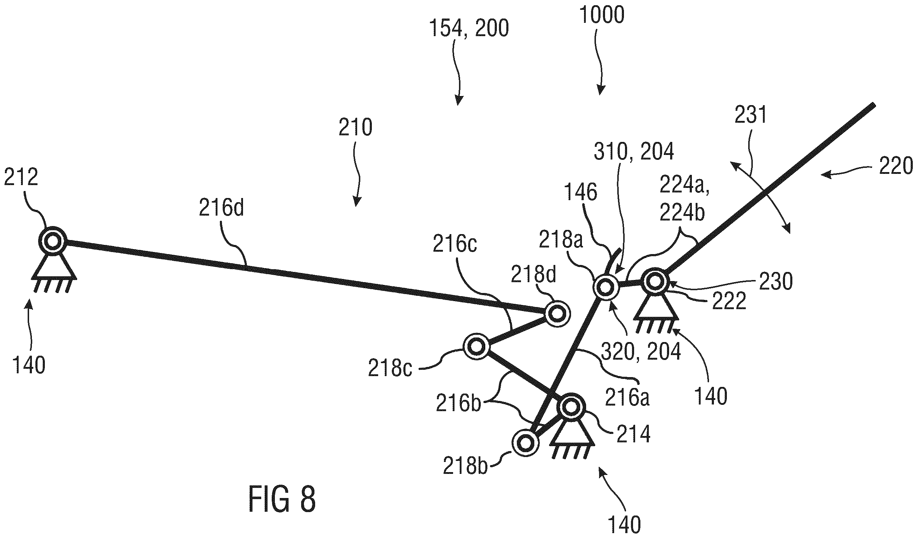

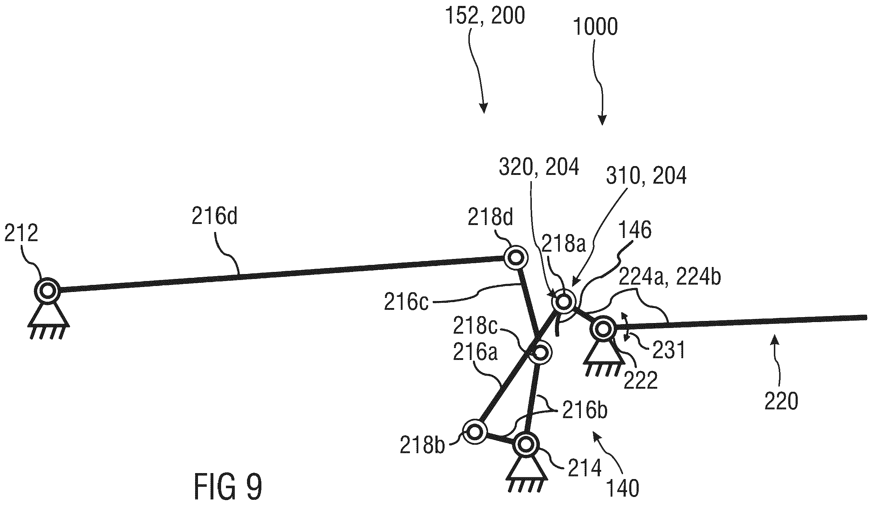

Figur 7 zeigt den Neigemechanismus 200 in einer aufrechten Sitzposition 150, Figur 8 zeigt den Neigemechanismus 200 nach Figur 5 in einer geneigten Zwischenposition 154 und Figur 9 zeigt den Neigemechanismus 200 nach Figur 5 in einer horizontalen Bettposition 152.

Der Neigemechanismus 200 umfasst eine einzige Antriebseinheit 230, um das Verstellen des Fahrzeugsitzes 1000 aus seiner aufrechten Sitzposition 150 in die horizontale Bettposition 152 und umgekehrt gemäß Pfeil 231 zu erzielen. Zum erfolgreichen Neigen des Fahrzeugsitzes 1000 kann es ferner ausreichen, die Sitzschale 102 und/oder die Rückenlehne 104 (dargestellt in Figur 1) manuell zu betätigen, beispielsweise sie zu bewegen, daran zu ziehen oder sie zu schieben, um ein vollständiges Verstellen des Fahrzeugsitzes 1000 aus seiner aufrechten Sitzposition 150 in die horizontale Bettposition 152 und umgekehrt gemäß Pfeil 231 zu erzielen.

Der erste Gestängemechanismus 210 umfasst mindestens ein erstes Koppelelement 310, das beweglich in einem Führungselement 146 geführt ist, das an dem festgelegten Basiselement 140 angeordnet ist.

Der erste Gestängemechanismus 210 umfasst die miteinander gelenkig gekoppelten Gestängeglieder 216 a bis 216d, wobei das erste Gestängeglied 216a als ein Antriebsglied fungiert. Die weiteren Gestängeglieder 216b bis 216d sind als Abtriebsglieder, insbesondere Drehstangen oder Drehhebel, ausgebildet.

Der zweite Gestängemechanismus 220 umfasst mindestens ein zweites Koppelelement 320 mit einem Aufnahmeabschnitt 322, der in dem gekoppelten Zustand 204 mit dem ersten Koppelelement 310 in Kontakt, insbesondere Eingriff, kommt, wie in Figur 8 gezeigt. Der gekoppelte Zustand 204 wird in der geneigten Zwischenposition 154 eingenommen.

Durch den Kontakt oder den Eingriff des zweiten Koppelelements 320 mit dem ersten Koppelelement 310 kann beispielsweise bei Betätigung, insbesondere Bewegung, des zweiten Gestängemechanismus 220 aus der geneigten Zwischenposition 154 in die horizontale Bettposition 152 eine Bewegung des ersten Gestängemechanismus 210 eingeleitet werden. Der Neigemechanismus 200 kann dazu ausgestaltet sein, die Sitzstützstruktur 130 zu transferieren, indem das erste Koppelelement 310 durch Bewegung des zweiten Koppelelements 320 entlang des Führungselements 146 verschoben wird.

Beispielsweise sind die Gestängemechanismen 210, 220 im entkoppelten Zustand 202 (dargestellt in Figur 7) voneinander getrennt. Insbesondere sind die Gestängemechanismen 210, 220 im entkoppelten Zustand 202 vollständig mechanisch voneinander entkoppelt. Mit anderen Worten: Die Gestängemechanismen 210, 220 sind beabstandet zueinander und führungsfrei voneinander entkoppelt.

Der Neigemechanismus 200 kann im entkoppelten Zustand 202 beispielsweise einen Freilaufbereich 240 (dargestellt in Figur 7) zwischen dem ersten Koppelelement 310 und dem zweiten Koppelelement 320 umfassen, so dass die Rückenlehne 104 aus der aufrechten Sitzposition 150 in eine geneigte Zwischenposition 154 geneigt werden kann, bevor die Koppelelemente 310, 320 im gekoppelten Zustand 204 in Eingriff kommen, um die Sitzschale 102 und die Rückenlehne 104 in die horizontale Bettposition 152 zu transferieren. Der Freilaufbereich 240 kann einen Abstand zwischen dem ersten Koppelelement 310 und dem zweiten Koppelelement 320 definieren, in dem beide Koppelelemente 310, 320 im entkoppelten Zustand 202 sein können.

### Bezugszeichenliste

- 100, 1000: Sitz/Fahrzeugsitz
- 102: Sitzschale
- 104: Rückenlehne
- 106: Beschlagvorrichtung
- 108: Drehachse
- 110: Längsverstellvorrichtung
- 112: Schienenbaugruppe
- 114: erstes Schienenelement (obere Schiene)
- 116: zweites Schienenelement (untere Schiene)
- 118: vorderer Abschnitt
- 120: hinterer Abschnitt
- 130: Sitzstützstruktur
- 140: Basiselement
- 142, 144: Basisabschnitt
- 146: Führungselement
- 150: Position, insbesondere aufrechte Sitzposition
- 152: Position, insbesondere horizontale Bettposition
- 154: Position, insbesondere geneigte Zwischenposition
- 200: Neigemechanismus
- 202: entkoppelter Zustand
- 204: gekoppelter Zustand
- 210: Gestängemechanismus, insbesondere erster Gestängemechanismus
- 212: festgelegtes Drehgelenk, insbesondere erstes festgelegtes Drehgelenk
- 214: festgelegtes Drehgelenk, insbesondere zweites festgelegtes Drehgelenk
- 216a bis 216d: Gestängeglied
- 218a bis 218d: Drehgelenk
- 220: Gestängemechanismus, insbesondere zweiter Gestängemechanismus
- 222: festgelegtes Drehgelenk
- 224a bis 224b: Gestängeglied
- 230: Antriebseinheit
- 231: Pfeil
- 240: Freilaufbereich
- 310: Koppelelement, insbesondere erstes Koppelelement
- 320: Koppelelement, insbesondere zweites Koppelelement
- 322: Aufnahmeabschnitt
- 330: Koppelelement, insbesondere drittes Koppelelement
- 332: Aufnahmeabschnitt
- 412 bis 424: Bewegungsbahn
- α1 bis α3, β1: Winkel
- y1, y2: horizontale Schwenkachse
- x: Längsachse
- y: Querachse
- z: vertikale Achse

## Patentansprüche

1. Sitz (100, 1000), insbesondere Fahrzeugsitz, der mindestens Folgendes umfasst
- eine Sitzstützstruktur (130), die mindestens ein festgelegtes Basiselement (140), eine Sitzschale (102) und eine Rückenlehne (104) umfasst, die relativ zum Basiselement (140) verstellbar sind, und
- einen Neigemechanismus (200), der ausgebildet ist, die Sitzstützstruktur (130) zwischen einer aufrechten Sitzposition (150) und mindestens einer horizontalen Bettposition (152) zu bewegen,
**dadurch gekennzeichnet, dass**
- der Neigemechanismus (200) einen ersten Gestängemechanismus (210), mit dem die Sitzschale (102) an das Basiselement (140) gekoppelt ist, und einen zweiten Gestängemechanismus (220), mit dem die Rückenlehne (104) an das Basiselement (140) gekoppelt ist, umfasst,
- wobei beide Gestängemechanismen (210, 220) in der aufrechten Sitzposition (150) relativ zueinander in einem entkoppelten Zustand (202) gehalten sind oder werden und bei Betätigung des Neigemechanismus (200) einen gekoppelten Zustand (204) einnehmen, um die Sitzstützstruktur (130) in die horizontale Bettposition (152) zu transferieren.

2. Sitz (100, 1000) nach Anspruch 1, **dadurch gekennzeichnet, dass** die Gestängemechanismen (210, 220) in dem gekoppelten Zustand (204) ausgebildet sind, die Sitzschale (102) und die Rückenlehne (104) gleichzeitig zu bewegen.

3. Sitz (100, 1000) nach Anspruch 1 oder 2, **dadurch gekennzeichnet, dass** die Gestängemechanismen (210, 220) in dem gekoppelten Zustand (204) ausgebildet sind, die Sitzschale (102) um eine erste horizontale Schwenkachse anzuheben und die Rückenlehne (104) um eine zweite horizontale Schwenkachse zu neigen, wobei die erste horizontale Schwenkachse von der zweiten horizontalen Schwenkachse verschieden ist.

4. Sitz (100, 1000) nach einem der vorhergehenden Ansprüche, **dadurch gekennzeichnet, dass** der Neigemechanismus (200) derart ausgebildet ist, dass der gekoppelte Zustand (204) der Gestängemechanismen (210, 220) durch Betätigung des zweiten Gestängemechanismus (220) relativ zum Basiselement (140) herstellbar ist.

5. Sitz (100, 1000) nach einem der vorhergehenden Ansprüche, **dadurch gekennzeichnet, dass** die Gestängemechanismen (210, 220) im entkoppelten Zustand (202) voneinander getrennt sind.

6. Sitz (100, 1000) nach einem der vorhergehenden Ansprüche, **dadurch gekennzeichnet, dass** die Gestängemechanismen (210, 220) im entkoppelten Zustand (202) vollständig mechanisch voneinander entkoppelt sind.

7. Sitz (100, 1000) nach einem der vorhergehenden Ansprüche, **dadurch gekennzeichnet, dass** die Gestängemechanismen (210, 220) Koppelelemente (310, 320) umfassen, die im entkoppelten Zustand (202) voneinander beabstandet angeordnet sind und im gekoppelten Zustand (204) miteinander in Eingriff gelangen.

8. Sitz (100, 1000) nach Anspruch 7, **dadurch gekennzeichnet, dass** der erste Gestängemechanismus (210) mindestens ein erstes Koppelelement (310) umfasst, das beweglich in einem Führungselement (146) geführt ist, das an dem festgelegten Basiselement (140) angeordnet ist, und der zweite Gestängemechanismus (220) mindestens ein zweites Koppelelement (320) mit einem Aufnahmeabschnitt (322) umfasst, der in dem gekoppelten Zustand (204) mit dem ersten Koppelelement (310) in Eingriff kommt.

9. Sitz (100, 1000) nach Anspruch 8, **dadurch gekennzeichnet, dass** der Neigemechanismus (200) ausgebildet ist, die Sitzstützstruktur (130) aus einer Position in eine andere zu transferieren, indem er durch Bewegung des zweiten Koppelelements (320) das erste Koppelelement (310) entlang des Führungselements (146) verschiebt.

10. Sitz (100, 1000) nach einem der vorhergehenden Ansprüche, **dadurch gekennzeichnet, dass** der Neigemechanismus (200) einen Freilaufbereich (240) zwischen den Gestängemechanismen (210, 220) umfasst, durch den die Rückenlehne (104) aus der aufrechten Sitzposition (150) in eine geneigte Zwischenposition (154) neigbar ist, bevor die Gestängemechanismen (210, 220) in den gekoppelten Zustand (204) gelangen, um die Sitzstützstruktur (130) in die horizontale Bettposition (152) zu transferieren.

11. Sitz (100, 1000) nach einem der vorhergehenden Ansprüche, **dadurch gekennzeichnet, dass** der erste Gestängemechanismus (210) zwei festgelegte Drehgelenke (212, 214) umfasst, zwischen denen eine erste Anzahl von relativ schwenkbaren Gestängegliedern (216a bis 216d) angeordnet sind, wobei die festgelegten Drehgelenke (212, 214) die Sitzschale (102) an das Basiselement (140) koppeln.

12. Sitz (100, 1000) nach einem der vorhergehenden Ansprüche, **dadurch gekennzeichnet, dass** der zweite Gestängemechanismus (220) ein festgelegtes Drehgelenk (222), das die Rückenlehne (104) an das Basiselement (140) koppelt, sowie eine zweite Anzahl von schwenkbaren Gestängegliedern (224a, 224b) umfasst, die um das festgelegte Drehgelenk (222) schwenkbar sind.
